(19) Europäisches Patentamt
European Patent Office
Office européen des brevets

(11) **EP 2 314 740 A1**

(12) **EUROPÄISCHE PATENTANMELDUNG**

(43) Veröffentlichungstag:
**27.04.2011 Patentblatt 2011/17**

(21) Anmeldenummer: **09173695.9**

(22) Anmeldetag: **21.10.2009**

(51) Int Cl.:
**D01F 1/10** (2006.01)   **D01F 6/84** (2006.01)
**D01D 5/00** (2006.01)   **A01N 25/10** (2006.01)
**A01N 25/34** (2006.01)   **A01G 13/02** (2006.01)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(71) Anmelder:
- **Justus-Liebig-Universität Gießen**
  **35390 Giessen (DE)**
- **Philipps-Universität Marburg**
  **35037 Marburg (DE)**
- **Staatliches Weinbauinstitut Freiburg**
  **79100 Freiburg (DE)**

(72) Erfinder:
- **Greiner, Andreas**
  **35287 Amöneburg (DE)**
- **Wendorff, Joachim H.**
  **64569 Nauheim (DE)**
- **Hellmann, Christoph**
  **London W11 1PY (GB)**

- **Agarwal, Seema**
  **35039 Marburg (DE)**
- **Breuer, Michael**
  **79361 Sasbach (DE)**
- **Leithold, Günter**
  **35428 Langgöns (DE)**
- **Hummel, Hans E.**
  **35394 Giessen (DE)**
- **Hein, Detlef**
  **53945 Blankenheim (DE)**

(74) Vertreter: **Stumpf, Peter**
  **Kerkrader Straße 3**
  **35394 Gießen (DE)**

Bemerkungen:
Ein Antrag gemäss Regel 139 EPÜ auf Berichtigung von Ansprüche liegt vor. Über diesen Antrag wird im Laufe des Verfahrens vor der Prüfungsabteilung eine Entscheidung getroffen (Richtlinien für die Prüfung im EPA, A-V, 3.).

(54)   **Ausbringung landwirtschaftlicher Wirkstoffe**

(57)   Die vorliegende Erfindung beschreibt eine Vorrichtung zur Ausbringung landwirtschaftlicher Wirkstoffe, wobei die Vorrichtung zeitlich und räumlich getrennt vom Herstellungsprozess an den Wirkort gebracht werden kann und einen Dispenser sowie mit landwirtschaftlichen Wirkstoffen beladene, nicht wasserlösliche Nano-und/ oder Mesofasern umfasst. Die Polymere, aus denen die Nano- oder Mesofasern bestehen, sind bevorzugt biologisch abbaubar. Die landwirtschaftlichen Wirkstoffe sind ausgewählt aus Fungiziden, Herbiziden, Bakteriziden, Pflanzenwuchsregulatoren und Pflanzennährstoffen. Bevorzugt handelt es sich um Pheromone, Kairomone und Signalstoffe.

Des Weiteren wird ein Verfahren zur Herstellung dieser Vorrichtung offenbart, bei dem die mit Wirkstoffen beladenen Nano- und/oder Mesofasern mittels Elektrospinnen hergestellt werden. Die Vorrichtung kann verwendet werden, um landwirtschaftliche Wirkstoffe zielich und räumlich getrennt vom Herstellungsprozess an ihren Wirkort zu bringen. Die Ausbringung kann mechanisch oder automatisch geschehen. Bevorzugt handelt es sich hierbei um eine Nutzfläche aus dem Obstoder Weinbau, dem Gartenbau oder einer kommerziellen Reihenkultur. Die erfindungsgemäße Vorrichtung ist besonders geeignet zur Arthropodenregulation.

**Beschreibung**

**Ausbringung landwirtschaftlicher Wirkstoffe**

Die vorliegende Erfindung beschreibt eine Vorrichtung zur Ausbringung landwirtschaftlicher Wirkstoffe, wobei die Vorrichtung zeitlich und räumlich getrennt vom Herstellungsprozess an den Wirkort gebracht werden kann und einen Dispenser sowie mit landwirtschaftlichen Wirkstoffen beladene, nicht wasserlösliche Nano-und/oder Mesofasern umfasst. Des Weiteren wird ein Verfahren zur Herstellung dieser Vorrichtung offenbart, bei dem die mit Wirkstoffen beladenen Nano-und/oder Mesofasern mittels Elektrospinnen hergestellt werden. Die Vorrichtung kann verwendet werden, um landwirtschaftliche Wirkstoffe an ihren Wirkort zu bringen. Bevorzugt handelt es sich hierbei um eine Nutzfläche aus dem Obst- oder Weinbau, dem Gartenbau oder einer kommerziellen Reihenkultur.

**Beschreibung und Einleitung des allgemeinen Gebietes der Erfindung**

Die vorliegende Erfindung betrifft die Gebiete Agrarwissenschaften, Biotechnologie, Materialwissenschaften und Nanotechnologie.

**Stand der Technik**

Als "landwirtschaftliche Wirkstoffe" werden im Folgenden in der Natur vorkommende oder unter Einsatz chemischer Verfahren extrahierte oder unter Einsatz chemischer und/oder mikrobiologischer Verfahren hergestellte, zur Pflanzen- oder/und Boden-behandlung bekannte Wirkstoffe verstanden, wie zum Beispiel: Fungizide, Bakterizide, Insektizide, Akarizide, Nematizide, Helminthizide, Herbizide, Molluskizide, Rodentizide, Algizide, Aphizide, Larvizide, Ovizide, Fraß-Lockstoffe, Antifeedants, Kairomone, Pheromone und andere Signalstoffe zum Management von Arthropoden, Repellents, Wildabwehrmittel, systemische Mittel sind, Pflanzenwuchsregulatoren oder Pflanzennährstoffe, wie z.B. aber nicht ausschliesslich Dünger.

Unter Insektiziden werden insbesondere Stoffe zur Beeinflussung der die Pflanzen umgebenden Tiere verstanden. Diese Stoffe können neben chemischen oder mikrobiologisch hergestellten Stoffen auch natürlich vorkommende Wirkstoffe, wie Extrakte, z.B. aus dem Neembaum oder der Quassia-Wurzel oder aber solche Stoffe sein, die u.a. das Sexualverhalten und die Eiabgabe der die Pflanzen umgebende Tiere beeinflussen, wie z.B. Pheromone.

Es sind eine ganze Reihe von Verfahren zur Ausbringung von Wirkstoffen bekannt, mit denen Wirkstoffe dem Boden oder Pflanzen zugeführt werden können. Dies sind die Ausbringung von

- **1)** Flüssigkeiten in Tropfenform durch Spritzen, Sprühen, Nebeln, Bestreichen sowie Tröpfchenbewässerung,
- **2)** Feststoffen in Form von Granulaten und Pulvern sowie
- **3)** gasförmigen Stoffen über verschiedene Dispenser.

Beispiele für **1** sind die seit langem üblichen Verfahren zur Ausbringung oder Verteilung, mit Gießkanne, Handspritze, Rückenspritze, Traktor, Helikopter und Flugzeug.

Beispiele für **2** sind neben Granulaten und Pulvern auch Adsorbate an festen natürlichen oder künstlichen Partikeln, z. B. Maiskolbenschrot, an dem das Kairomon MCA absorbiert wurde. Dies ist beispielsweise beschrieben in Hummel, H. E., Metcalf, R. L. (1996). Diabrotica barberi and D. virgifera virgifera fail to Orient Towards Sticky Traps in Maize Fields Permeated with the Plant Kairomones p-methoxyphenylethanol and p-methoxy-trans-cinnamaldehyde. Med. Fac. Landbouww. Univ. Gent 61/3b, 1011-1018; Hummel, H. E., Hein, D. F., Metcalf, R. L. (1997). Orientation disruption of Western Corn Rootworm Beetles by Air Permeation with Host Plant Kairomone Mimics. p. 36 in: 2nd FAO WCR/TCP Meeting and 4th International IWGO Workshop, Oct. 28-30, 1997, Gödöllö, Hungary, J. Kiss, ed. und Wennemann, L., H. E. Hummel. 2001. Diabrotica beetle orientation disruption with the plant kairomone mimic 4-methoxycinnamaldehyde in Zea mays L. Mitt. Dtsch. Ges. allg. angew. Ent. 13: 209-214. Sehr viel Entwicklungsarbeit floss bereits in die Technologie der Dispenser. Eine kritische Übersicht über den bis 1982 erreichten Stand ist in der Monographie von Leonhardt, B.A., Beroza, M. (eds.) (1982). Insect pheromone technology: chemistry and applications. ACS Symposium Series # 190. American Chemical Society, Washington D.C. ISBN 0-8412-0724-0 zu finden. Weitere Beispiele finden sich in Hummel, H.E., Miller,T.A.,eds (1984). Techniques in Pheromone Research. Springer, New York. ISBN 0-387-90919-2. In F Trona, G Anfora, M Baldessari, V Mazzoni, E Casagrande, C Ioratti, G Angeli: "Mating disruption of codling moth with a continuous adhesive tape carrying high densities of pheromone dispensers", Bull Insectol 2009, 62, 7-13 wird ein Endlos-Klebeband mit Dispensern beschrieben, die (E,E)-8,10-Dodecadien-1-ol (Codlemone®) enthalten und die maschinell, beispielsweise mit einem modifizierten Laubhefter ausgebracht werden können. In den folgenden Aufsätzen sind Methoden zur Bekämpfung des Maiswurzelbohrers *Diabrotica virgifera virgifera* beschrieben:

1. HE Hummel, JT Shaw, DF Hein: A promising biotechnical approach to pest management of the western corn rootworm in Illinois maize fields shielded with a MCA kairomone baited trap line. Mitt. dtsch. Ges. allg. angew. Ent. 2006, 15, 131-135

2. HE Hummel, A Deuker, G Leithold: The leaf beetle Diabrotica virgifera virgifera LeConte: a merciless entomological challenge for agriculture. IOBC/wprs Bulletin 2009, 41, 103-110.

3. HE Hummel: Diabrotica virgifera virgifera LeConte: inconspicuous leaf beetle - formidable challenges to agriculture. Comm. Appl. Biol. Sci. 2007, 71, 7-32.

4. HE Hummel, M Bertossa, A Deuker: The current status of Diabrotica virgifera virgifera in selected european countries and emerging options for its pest management. pp. 338-348. In: FELDMANN, F., ALFORD, D.V. & FURK, C. (eds.). Crop plant resistance to biotic and abiotic factors: current potential and future demands. Proceedings of the 3rd International Symposium on Plant Protection and Plant Health in Europe, Berlin, Germany, 14-16 May 2009. DPG Selbstverlag.

Das Verfahren unter **2** wird üblicherweise zur Ausbringung von Dünger angewendet.

Beispiele für **3** sind Pheromone, die aus halboffenen PTFE-Kapillaren verdampft werden, z. B. formuliert mit Kleber, und vom Flugzeug verteilt werden. Dies ist in Brooks, T.W., Doane, C.C., Staten, R.T. (1979). Experience with the first commercial pheromone communication disruptive for suppression of an agricultural insect pest. pp 375-388. In: Chemical Ecology: Odour Communication in Animals, ed. F.J. Ritter. Amsterdam: Elservier/North Holland Biomedical. ISBN 0-444-80103-0, beschrieben. Weiterhin zu nennen sind Doppelkammer-Dispenser der Fa. Hercon Laboratories Corp., York, Pennsylvania, USA für Pheromone, wie sie von der Fa. BASF AG im Obst- und Weinbau Verwendung fanden. Schließlich sind zu nennen die von Shorey, H. H., Gerber, R. G. 1996. Use of puffers for disruption of sex pheromone communication of codling moths (Lepidoptera: Tortricidae) in walnut orchards. Environ. Entomol 25 (6): 1398-1400 beschriebenen "Lecture-bottle"-Puffersysteme, in denen komprimierte Signalstoff-Lösungen aufbewahrt und aus denen auf Funkbefehl durch Ventile Formulierungen abgegeben werden.

Der Nachteil dieser Verfahren ist, dass im allgemeinen die Zuführung der Wirkstoffe nicht kontinuierlich ist, sich nur über einen sehr begrenzten Zeitraum erstreckt und dass Störfaktoren wie Wind und Regen diese Zuführung sowie den Verbleib des Wirkstoffes auf der Zielfläche (z. B. dem Boden im Bereich von dort später oder schon gewachsenen Pflanzen oder den Oberflächen von Pflanzen) sehr negativ beeinflussen. Dies hat zur Folge, dass bei einer erwünschten Bereitstellung von Wirkstoffen über einen längeren Zeitraum hinweg eine *mehrfache* Ausbringung des Wirkstoffes notwendig ist, was mit erhöhten Kosten verbunden ist. Die Alternative einer einmaligen Ausbringung der gesamten Wirkstoffmenge birgt die Gefahr, dass die Wirkstoffe in Nicht-Zielflächen verlagert werden und somit zumindest einen finanziellen Verlust für den Anwender, wenn nicht sogar unerwünschte ökologische Einflüsse in Nicht-Zielflächen darstellen. Der Abtransport über Wasser hin in das Erdreich oder in Seen, Bäche und Flüsse ist ein typisches Beispiel.

Hier sind Trägermaterialien oder -systeme vorteilhaft, wie sie für medizinische Wirkstoffe aber auch Wirkstoffe für die Landwirtschaft beschrieben wurden.

Der Nachteil dieser Verfahren ist, dass im allgemeinen die Zuführung der Wirkstoffe diskontinuierlich von Hand erfolgt, sich nur über einen sehr begrenzten Zeitraum erstreckt, und dass Störfaktoren wie Wind und Regen diese Zuführung sowie den Verbleib des Wirkstoffes auf der Zielfläche (z. B. dem Boden im Bereich von dort später oder schon gewachsenen Pflanzen oder den Oberflächen von Pflanzen) sehr negativ beeinflussen. Dies hat zur Folge, dass bei einer erwünschten Bereitstellung von Wirkstoffen über einen längeren Zeitraum hinweg eine *mehrfache* Ausbringung des Wirkstoffes notwendig ist, was mit erhöhten Kosten verbunden ist. Die Alternative einer einmaligen Ausbringung der gesamten Wirkstoffmenge birgt die Gefahr, dass die Wirkstoffe in Nicht-Zielflächen verlagert werden und somit zumindest einen finanziellen Verlust für den Anwender, wenn nicht sogar unerwünschte ökologische Einflüsse in Nicht-Zielflächen darstellen. Der Abtransport über Wasser hin in das Erdreich oder in Seen, Bäche und Flüsse ist ein typisches Beispiel.

Hier sind Trägermaterialien oder -systeme vorteilhaft, wie sie für medizinische Wirkstoffe, aber auch Wirkstoffe für die Landwirtschaft beschrieben wurden. Hierzu gehören beispielsweise mit landwirtschaftlichen Wirkstoffen beladenen, bioabaubare Polymerfasern oder Polymerformkörper. Ganz wesentlich für die Einstellung der Freisetzung ist in allen Fällen das Verhältnis von Oberfläche zu Volumen der Polymerfaser oder des Polymerformkörpers. Dieses Verhältnis ist besonders günstig bei nanostrukturierten Fasern und nimmt sehr stark mit abnehmendem Faserdurchmesser zu.

Als Ergebnisse der Nanoforschung sind schon einige prinzipiell geeignete Träger von Wirkstoffen und deren Herstellverfahren bekannt.

Ein besonders günstiges Verfahren sowohl zur schonenden Einbettung der Wirkstoffe in den Träger als auch zur Kontrolle der Faserdurchmesser bis in den Nanometerbereich herab stellt das *Elektrospinnen* dar.

Details zum Prozess des Elektrospinnens (auch Electrospinning genannt) werden z.B. beschrieben in D.H. Reneker, 1. Chun, Nanotechn. 7, 216 (1996) oder Fong, H.; Reneker, D.H.; J. Polym. Sci, Part B 37 (1999), 3488 und in DE 100 23 45 69. Eine Übersicht über das Elektrospinnen liefert auch A Greiner, JH Wendorff: "Electrospinning: A Fascinating Method for the Preparation of Ultrathin Fibers." Angew Chem Int Ed 2007, 46, 5670-5703.

Die Faserbildung erfolgt im Fall des Elektrospinnens mittels einer hohen elektrischen Spannung, angelegt zwischen einer Düse und einer Gegenelektrode. Das zu verspinnende Material liegt dabei in Form einer Schmelze oder/und einer Lösung vor und wird durch die Düse transportiert. Das elektrische Feld führt über induzierte Ladungen zu einer Deformation des aus der Düse austretenden Tröpfchens, es bildet sich ein feiner Materialstrom, der in Richtung auf die Gegenelektrode beschleunigt wird. Der Materialstrom wird dabei deformiert, verästelt sich - wie bei Blitzentladungen - und wird schließlich auf einem Substrat abgeschieden. Während des Spinnvorgangs verdunstet das Lösungsmittel bzw. erkaltet die Schmelze.

Abgeschieden werden die Fasern mit einer Geschwindigkeit von mehreren Metern pro Sekunde, die Fasern selbst können bis zu einer Länge von mehreren Metern hergestellt werden. Das Endergebnis ist ein sehr feines Fasergespinst auf dem Substrat. Durch Einstellung der Konzentration der Lösung, des angelegten Feldes, der Temperatur, über die Verwendung von Zusatzstoffen und weiterer Parameter, wie zusätzliche Elektroden, der Viskosität, der Verarbeitungstemperatur etc., lassen sich die erzielten Durchmesser der Fasern in einem weiten Bereich einstellen. Fasern bis zu einigen Nanometer herab sind erhältlich; dabei können auf dem Substrat oder der Zielfäche großflächige Faseranordnungen bis in den Quadratmeter-Bereich herauf abgeschieden werden.

Fasern aus amorphen oder teilkristallinen Polymeren, aus Blockcopolymeren, aus Polymerlegierungen können auf diese Weise erzeugt werden. So wurden z.B. Nanofasern aus so unterschiedlichen natürlichen und synthetischen Polymeren erzeugt wie Polyamiden, Polycarbonat oder Polymethylmethacrylat, aus Polynorbornen, aus Polyvinylidenfluorid, aus Cellulose, aus Polylactiden. Notwendig ist für das jeweilige Material die genaue Einstellung der Kontrollparameter für das Elektrospinnen. Beispiele sind das Elektrodenmaterial, die Elektrodenform und - anordnung, die Gegenwart von Hilfselektroden und Steuerelektroden, die Viskosität der Schmelze bzw. Lösung des Templatmaterials sowie deren Oberflächenspannung und Leitfähigkeit. Werden diese Parameter nicht optimal gewählt, dann werden eher Tropfen als Fasern abgeschieden, der Durchmesser liegt im Mikrometerbereich oder die Faserdurchmesser schwanken stark. Für die Eigenschaften der Fasern ist es von Bedeutung, dass es während des Elektrospinnens partiell zu einer Orientierung der Kettenmoleküle in den Fasern kommt, wie über Elektronenbeugung an einer Faser mit einem Durchmesser von etwa 50 nm gezeigt wurde. Die erhaltenen Orientierungen sind durchaus von gleicher Größenordnung wie die von kommerziellen schmelze-extrudierten Fasern.

Ein großer Vorteil des Elektrospinnens ist es, dass auch Wasser als Lösungsmittel verwendet werden kann, so dass wasserlösliche Polymeren, auch wasserlösliche biologische Systeme versponnen werden können. Beispiele sind das Polyvinylalkohol, Polyvinylpyrrolidon, Polyethylenoxid. Je nach Anordnung und Form der Elektroden werden Gewebe erhalten, aber auch parallele Stränge.

Beispiele für diesbezügliche Ergebnisse der Nanoforschung sind:

i) die DE 100 23 456 A1, worin Hohlfasern mit einem Innendurchmesser von 10 nm bis 50 μm und einer Aussenwand, aufgebaut aus metallhaltigen anorganischen Verbindungen, Polymern und/oder Metallen vorgeschlagen werden, welche nach einem ersten Verfahren dadurch herstellbar sind, dass eine Faser aus einem ersten abbaubaren Material mindestens eine Beschichtung aus mindestens einem weiteren Material erhält und anschließend das erste Material mit der Maßgabe abgebaut wird, daß die so erhaltene Hohlfaser einen Inndendurchmesser von 10 nm bis 50 μm aufweist.

Als zweite Lösung wird in der oben genannten Schrift ein Verfahren vorgeschlagen, wonach eine Faser eines ersten nicht abbaubaren Materials nacheinander mit einem zweiten, abbaubaren Material und mindestens einem weiteren Material beschichtet wird und das zweite abbaubare Material mit der Maßgabe abgebaut wird, das bezogen auf das mindestens eine weitere Material eine Hohlfaser mit einem Innendurchmesser von 10 nm bis 50 μm und einem Kern aus dem ersten Material erhalten wird. Der Gegenstand dieser Schrift wurde gemäß Anspruch 21 auch für den Einsatz im Bereich "Controlled Release" vorgesehen.

ii) die DE 100 40 897 A1, worin poröse Fasern aus polymeren Materialien vorgeschlagen werden, die Fasern mit Durchmessern von 20 bis 4.000 nm und Poren (etwa zur Aufnahme von Wirkstoffen) in Form von mindestens bis zum Fasernkern reichenden und/oder durch die Faser reichenden Kanälen aufweisen.

Diese Fasern sind gemäß Anspruch 7 der obigen Schrift dadurch herzustellen, dass eine 5 bis 20 Gew.-%-Lsg. mindestens eines Polymeren in einem leicht verdampfbaren organischen Lösungsmittel oder Lösungsmittelgemisch mittels Elektrospinning bei einem Feld über 10^5 V/m versponnen wird, wobei die resultierende Faser einen Durchmesser von 20 bis 4.000 nm und Poren in Form von mindestens bis zum Faserkern reichende und/oder durch die Faser reichenden Kanälen aufweist. Damit sind Oberflächen von 100 bis zu 700 m$^2$/g realisierbar. Nach einem bevorzugten Ausführungsbeispiel des Gegenstandes dieser Schrift (Spalte 4, Absätze [0028] und [0029] sind durch Verwendung von zwei Polymeren (eines wasserun- und eines wasserlöslichen) auch Fasern herstellbar, welche zunächst keine Kanäle aufweisen. Diese zeigen jedoch ebenfalls Poren oder Kanäle auf, wenn durch Einwirkung von Wasser die wasserlöslichen Polymere aus den Ihnen zugeordneten Poren/Kanälen gelöst werden. Für die genaueren Herstellbedingungen sei auf diese Schrift verwiesen.

Wird die Oberfläche strukturiert, dann ändert sich z. B. das Benetzungsverhalten, das Lösungsverhalten und das Abbauverhalten, das Adsorptionsverhalten, das Verhältnis von Oberfläche zu Volumen. Das Konzept ist, eine während des Elektrospinnens einsetzende Phasenseparation gezielt zur Erzeugung von solchen Oberflächenstrukturen zu verwenden (8-10). Hier bietet sich zum einen die Verwendung eines binären Systems Polymer/Lösungsmittel an. Bei leicht flüchtigen Lösungsmitteln kommt es beim Elektrospinnen zu einer Verarmung des Lösungsmittels und damit unter bestimmten Bedingungen zu einer Phasenseparation, zur Ausbildung einer bestimmten Phasenmorphologie, die dann schließlich zu einer entsprechenden Strukturierung der Fasern führt. Bemerkenswert ist die Regelmäßigkeit der sich ausbildenden Struktur. Diese kann daher sehr gut zur Herstellung gleich bleibender, retardierender Träger genutzt werden. Die Poren besitzen einen ellipsoidalen Querschnitt, wobei diese z. B. in Richtung der Faserachse etwa 300 nm lang und senkrecht dazu 50 nm bis 150 nm breit sind. Der zweite Weg (siehe oben DE 100 40 897 A1) sieht die Verwendung von ternären Systemen Polymerl/Polymer2/Lösungsmittel vor. Bei der Fasererzeugung tritt eine Entmischung der beiden Polymeren auf, wenn sie unverträglich sind. Es entstehen Fasern mit einer binodalen (disperse Phase/Matrixphase) oder auch kokontinuierlichen spinodalen Struktur. Solche Compositefasern sind für sich allein genommen bereits interessant. Entfernt man selektiv eine der beiden Komponenten, dann entstehen Fasern mit spezifischer Oberflächenstrukur.

> iii) Die WO 2005/115143 A1 beschreibt ein modifiziertes Elektrospinningverfahren unter Verwendung des Ackerbodens und/oder mehrerer Pflanzen und/oder Pflanzensamen als Gegenelektrode, bei dem nanoskalige und/oder nanostrukturierte Polymerfasern hergestellt werden, die mit landwirtschaftlichen Wirkstoffen beladen sind.

Der Stand der Technik kennt die oben genannten Nanofaser-Dispenser, die durch direktes Elektrospinnen im Feld ausgebracht werden. Die Polymere und Wirkstoffe liegen in einer Lösung vor, woraus dann im Feld die Nanofasern erzeugt werden. Beim Elektrospinnen werden die Nanofasern aus einer Lösung heraus erzeugt. Während dieses Prozesses verdampft das Lösungsmittel und gelangt in die Umwelt. Einige Polymere lassen sich nur in organischen Lösungsmitteln (z.B. Chloroform) lösen und anschließend verspinnen. Bei diesen Polymeren ist ein direktes Elektrospinnen im Feld nicht durchführbar, da ein Freisetzen solcher Lösungsmittel in die Umwelt nicht erwünscht ist.

Des Weiteren kennt der Stand der Technik Dispenser, welche ohne Elektrospinnen auskommen. Hierzu zählen kommerzielle Dispenser wie z.B. RAK-Dispenser (BASF) und Isonet-Dispenser (Shin-Etsu). Diese Dispenser werden von Hand im jeweiligen Bestand ausgebracht. In der Regel ist eine Menge von 500 Dispensern pro ha nötig. Die Form der Ausbringung der Dispenser von Hand bedeutet einen nicht unerheblichen Bedarf an Arbeitskräften.

In der landwirtschaftlichen Praxis ist es in einigen Fällen jedoch vorteilhafter, diese wirkstoffbeladenen Polymerfasern ohne Zuhilfenahme von Ackerboden, Pflanzen bzw. Pflanzensamen als Gegenelektrode herzustellen. Es ist vielmehr wünschenswert, solche mit Wirkstoffen beladenen Polymere auf Vorrat herstellen zu können und sie erst bei Bedarf an den Wirkort, beispielsweise die landwirtschaftliche Nutzfläche, zu verbringen.

Die vorliegende Erfindung überwindet diese Nachteile des Standes der Technik, indem sie neuartige, bereits vorgefertigte und mit Wirkstoffen beladene Dispenser bereitstellt.

## Aufgabe

Aufgabe der Erfindung ist es, eine Vorrichtung zur Ausbringung landwirtschaftlicher Wirkstoffe bereitzustellen, wobei die Vorrichtung zeitlich und räumlich getrennt vom Herstellungsprozess an der Wirkort gebracht werden kann, sowie ein Verfahren zur Herstellung dieser Vorrichtung.

## Lösung der Aufgabe

Die Aufgabe der Bereitstellung einer Vorrichtung zur Ausbringung landwirtschaftlicher Wirkstoffe, wobei die Vorrichtung zeitlich und räumlich getrennt vom Herstellungsprozess an den Wirkort gebracht werden kann, wird erfindungsgemäß gelöst durch eine Vorrichtung umfassend einen Dispenser sowie mit landwirtschaftlichen Wirkstoffen beladene, nicht wasserlösliche Nano- und/oder Mesofasern.

Überraschend wurde gefunden, dass mit landwirtschaftlichen Wirkstoffen beladene, nicht wasserlösliche Nano- und/oder Mesofasern auf einen Dispenser aufgebracht werden können, so dass sie zeitlich und räumlich getrennt vom Herstellungsprozess an den Wirkort gebracht werden können.

Die erfindungsgemäße Vorrichtung sowie das Verfahren zu ihrer Herstellung sind nachfolgend erläutert, wobei die Erfindung alle nachfolgend aufgeführten Ausführungsformen einzeln und in Kombination miteinander umfasst.

Unter "Dispenser" wird hierbei eine manuelle, halbautomatische oder automatische Ausgabevorrichtung für Wirkstoffe - hier: für landwirtschaftliche Wirkstoffe - verstanden. Unter einem Trägermaterial wird dabei eine Unterlage oder Grundlage verstanden, auf der die mit Wirkstoffen beladenen Nano- und/oder Mesofasern aufgebracht sind. Dementsprechend fungiert der Dispenser erfindungsgemäß als Trägermaterial für die mit Wirkstoffen beladenen Nano- und/oder Mesofasern. Landwirtschaftlich einsetzbare Dispenser sind dem Fachmann bekannt und können verwendet werden, ohne den Schutzbereich der Patentansprüche zu verlassen.

Unter "Wirkort" wird derjenige Ort verstanden, an dem die landwirtschaftlichen Wirkstoffe zum Einsatz kommen. Hierbei handelt es sich beispielsweise um eine landwirtschaftliche Nutzfläche, bevorzugt um eine Nutzfläche aus dem Obst- oder Weinbau, dem Gartenbau und der Reihenkultur.

Unter "wasserstabilen Polymerfasern" sind erfindungsgemäß Fasern aus solchen Polymeren zu verstehen, die im Wesentlichen wasserunlöslich sind. Unter im Wesentlichen wasserunlöslichen Polymeren sind im Sinne der vorliegenden Erfindung insbesondere Polymere mit einer Löslichkeit in Wasser von weniger als 0,1 Gew.-% zu verstehen. Dementsprechend sind Polymere, deren Löslichkeit in Wasser größer oder gleich 0,1 Gew.-% beträgt, im Sinne der vorliegenden Erfindung als wasserlösliche Polymere zu verstehen.

Handelt es sich bei den Nano- und/oder Mesofasern um wasserstabile Polymerfasern, so sind die Polymere ausgewählt aus Poly-(p-xylylen); Polyvinylhalogeniden; Polyvinylidenhalogeniden; Polyestern wie Polyethylenterephthalaten, Polybutylenterephthalat, Polyvinylestern; Polyethern; Polyvinylethern; Polyolefinen wie Polyethylen, Polypropylen, Poly(Ethylen/Propylen) (EPDM); Polycarbonaten; Polyurethanen; natürlichen Polymeren, z.B. Kautschuk; Polycarbonsäuren; Polysulfonsäuren; sulfatierten Polysacchariden; Polylactiden; Polyglycosiden; Polyamiden; Homo- und Copolymerisaten von aromatischen Vinylverbindungen wie Poly(alkyl) styrolen, Polystyrolen, Poly-α-Methylstyrolen; Polyacrylnitrilen; Polymethacrylaten; Polymethacrylnitrilen; Polyacrylamiden; Polyimiden; Polyphenylenen; Polysilanen; Polysiloxanen; Polybenzimidazolen; Polybenzothiazolen; Polyoxazolen; Polysulfiden; Polyesteramiden; Polyarylenvinylenen; Polyetherketonen; Polyurethanen; Polysulfonen; Polyvinylsulfonen; Polyvinylsulfonsäuren; Polyvinylsulfonsäureestern; anorganisch-organischen Hybridpolymeren wie ORMO-CER®en der Fraunhofer Gesellschaft zur Förderung der angewandten Forschung e.V. München; Siliconen; vollaromatischen Copolyestern; Poly(alkyl)acrylaten; Poly(alkyl)methacrylaten; Polyhydroxyethylmethacrylaten; Polyvinylacetaten; Polyisopren, synthetischen Kautschuken wie Chlorbutadien-Kautschuken, z.B. Neopren® von DuPont; Nitril-Butadien-Kautschuken, z.B. Buna N®; Polybutadien; Polytetrafluorethylen; modifizierten und nicht modifizierten Cellulosen, Homo- und Copolymerisaten von α-Olefinen, Vinylsulfonsäuren, Maleinsäuren, Alginaten oder Collagenen, 1,ω-Dicarbonsäuren, Polyolen, insbesondere 1,ω-Diolen wie Adipinsäu re.

Des Weiteren können die Polymere aus wasserlöslichen Polymeren, wie beispielsweise Polyvinylalkohol, Polyethylenoxid, Polyvinylpyrrolidon oder Hydroxypropylcellulose handeln, sofern Fasern aus diesen Polymeren nach dem Elektrospinnen durch einen weiteren Verarbeitungsschritt gegenüber Wasser stabilisiert werden. Bei diesem weiteren Verarbeitungsschritt handelt es sich bevorzugt um eine Vernetzung. Diese kann beispielsweise thermisch oder photochemisch oder strahleninduziert erfolgen, wobei im Falle der photochemischen Vernetzung die Zuhilfenahme eines Photoinitiators besonders vorteilhaft ist. "Strahleninduziert" bezieht sich hierbei auf hochenergetische Strahlung (höher energetisch als der VIS-Bereich), z. B. auf UV- und Röntgen- oder Gammastrahlung. Des Weiteren kann die Vernetzung durch Reaktion des wasserlöslichen Polymeren mit einem Vernetzungsmittel geschehen. Zu diesen Vernetzungsmitteln gehören beispielsweise Dialdehyde, Natriumhypochlorit, Isocyanate, Dicarbonsäurehalogenide und chlorierte Epoxide. Dem Fachmann ist bekannt, wie er Fasern aus wasserlöslichen Polymeren gegenüber Wasser stabilisiert. Er kann dieses Wissen anwenden, ohne den Schutzbereich der Patentansprüche zu verlassen.

Des Weiteren kann es sich bei den Polymeren um Biopolymere handeln. Erfindungsgemäß sind unter Biopolymeren solche Polymere zu verstehen, die duch Polymerisationsprozesse aus in der Natur vorkommenden Monomereinheiten aufgebaut sind. Nachfolgend sind einige dieser Biopolymere beispielhaft, aber nicht erschöpfend genannt, wobei die entsprechenden Monomereinheiten in Klammern angegeben sind: Proteine und Peptide (Aminosäuren); Polysaccharide wie Stärke, Cellulose, Glykogen (Glucose); Lipide (Carbonsäuren); Polyglucosamine wie Chitin und Chitosan (Acetylglucosamin, Glucosamin); Polyhydroxyalkanoate, auch als PHB bezeichnet (Hydroxyalkanoat); Cutin (C16- und C18-Untereinheiten); Suberin (Glycerin und Polyphenole); Lignin (Cumarylalkohol, Coniferylalkohol, Sinapylalkohol). Dem Fachmann ist bekannt, dass einige dieser Biopolymere wasserlöslich sind. Wasserlösliche Biopolymere, die im Rahmen der vorliegenden Erfindung eingesetzt werden, müssen - wie für die synthetischen Polymere beschrieben - durch einen weiteren Verarbeitungsschritt gegenüber Wasser stabilisiert werden.

Alle vorgenannten Polymere können erfindungsgemäß jeweils einzeln (Homopolymere) oder in beliebigen Kombinationen miteinander (Copolymere) eingesetzt werden. Copolymere können dabei aus zwei oder mehr Monomereinheiten aufgebaut sein, welche die vorstehend genannten Polymere bilden. Des Weiteren kann es sich bei den Copolymeren um statistische Copolymere, Gradientencopolymere, alternierende Copolymere, Blockcopolymere oder Pfropfcopolymere handeln. Alle vorgenannten Polymere können in den erfindungsgemäß einzusetzenden Polymerfasern jeweils einzeln oder in beliebiger Kombination und in jedem beliebigen Mischungsverhältnis eingesetzt werden.

Optional können den Polymeren Verbundzusatzstoffe wie beispielsweise Terephthalsäure zugesetzt werden.

Beispiele für landwirtschaftliche Wirkstoffe sind:

Beispiele für Fungizide:

2-Aminobutan; 2-Anilino-4'-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichloro-N-(4-trifluoromethylbenzyl)-benzamid; (E)-2-Methoximino-N-methyl-2-(2-phenoxyphenyl)-acetamid; 8-Hydroxychinolinsulfat; Methyl-(E)-2- 2-[6-(2-cyanophenoxy)-pyrimidin-4-yloxy]-phenyl-3-methoxyacrylat; Methyl-(E)-methoximino[alpha-(o-tolyloxy)-o-tolyl]-acetat; 2-Phenylphenol (OPP), Aldimorph, Ampropylfos, Anilazin, Azaconazol, Benalaxyl, Benodanil, Benomyl, Binapacryl, Biphenyl, Bitertanol, Blasticidin-S, Bromuconazole, Bupirimate, Buthiobate, Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram, Dichlorophen, Diclobutrazol, Dichlofluanid, Diclomezin, Dicloran, Diethofencarb, Difenoconazol, Dimethirimol, Dimethomorph, Diniconazol, Dinocap, Diphenylamin, Dipyrithion, Ditalimfos, Dithianon, Dodine, Drazoxolon, Edifenphos, Epoxyconazole, Ethirimol, Etridiazol, Fenarimol, Fenbuconazole, Fenfuram, Fenitropan, Fenpiclonil, Fenpropidin, Fenpropimorph, Fentinacetat, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox, Guazatine, Hexachlorobenzol, Hexaconazol, Hymexazol, Imazalil, Imibenconazol, Iminoctadin, Iprobenfos (IBP), Iprodion, Isoprothiolan, Kasugamycin, Kupfer-Zubereitungen, wie: Kupferhydroxid, Kupfernaphthenat, Kupferoxychlorid, Kupfersulfat, Kupferoxid, Oxin-Kupfer und Bordeaux-Mischung, Mancopper, Mancozeb, Maneb, Mepanipyrim, Mepronil, Metalaxyl, Metconazol, Methasulfocarb, Methfuroxam, Metiram, Metsulfovax, Myclobutanil, Nickeldimethyldithiocarbamat, Nitrothal-isopropyl, Nuarimol, Ofurace, Oxadixyl, Oxamocarb, Oxycarboxin, Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon, Quintozen (PCNB), Schwefel und Schwefel-Zubereitungen, Tebuconazol, Tecloftalam, Technazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Tridemorph, Triflumizol, Triforin, Triticonazol,Validamycin A, Vinclozolin, Zineb, Ziram, 8-tert.-Butyl-2-(N-ethyl-N-n-propyl-amino)-methyl-1,4-dioxa-spiro-[4,5] decan, N-(R)-(1-(4-Chlorphenyl)-ethyl)-2,2-dichlor-1-ethyl-3t-methyl-1 r-cyclopropancarbonsäureamid (Diastereomerengemisch oder vereinzelte oder einzelne Isomere), [2-Methyl-1-[[[1(4-methylphenyl)-ethyl]-amino]-carbonyl]-propyl]-carbaminsäure 1-methylethylester und 1-Methyl-cyclohexyl-1-carbonsäure-(2,3-dichlor-4-hydroxy)-anilid.

Beispiele für Bakterizide sind:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Beispiele für Akarizide, Insektizide und Nematizide sind:

Abamectin, Acephat, Acrinathrin, Alanycarb, Aldicarb, Alphamethrin, Amitraz, Avermectin, Az 60541, Azadirachtin, Azinphos A, Azinphos M, Azocyclotin, Bacillus thuringiensis, 4-Bromo-2-(4-chlorphenyl)-1-(ethoxymethyl)-5-(trifluoromethyl)-1 H-pyrrole-3-carbonitrile, Bendiocarb, Benfuracarb, Bensultap, Betacyfluthrin, Bifenthrin, BPMC, Brofenprox, Bromophos A, Bufencarb, Buprofezin, Butocarboxin, Butylpyridaben, Cadusafos, Carbaryl, Carbofuran, Carbophenothion, Carbosulfan, Cartap, Chloethocarb, Chloretoxyfos, Chlorfenvinphos, Chlorfluazuron, Chlormephos, N-[(6-Chloro-3-pyridinyl)-methyl]-N'-cyano-N-methyl-ethanimidamide, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin, Deltamethrin, Demeton-M, Demeton- S, Demeton-S-methyl, Diafenthiuron, Diazinon, Dichlofenthion, Dichlorvos, Dicliphos, Dicrotophos, Diethion, Diflubenzuron, Dimethoat, Dimethylvinphos, Dioxathion, Disulfoton, Edifenphos, Emamectin, Esfenvalerat, Ethiofencarb, Ethion, Ethofenprox, Ethoprophos, Etrimphos, Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Fluazuron, Flucycloxuron, Flucythrinat, Flufenoxuron, Flufenprox, Fiuvalinate, Fonophos, Formothion, Fosthiazat, Fubfenprox, Furathiocarb, HCH, Heptenophos, Hexaflumuron, Hexythiazox, Imidacloprid, Iprobenfos, Isazophos, Isofenphos, Isoprocarb, Isoxathion, Ivermectin, Lambda-cyhalothrin, Lufenuron, Malathion, Mecarbam, Mevinphos, Mesulfenphos, Metaldehyd, Methacrifos, Methamidophos, Methidathion, Methiocarb, Methomyl, Metolcarb, Milbemectin, Monocrotophos, Moxidectin, Naled, NC 184, Nitenpyram, Omethoat, Oxamyl, Oxydemethon M, Oxydeprofos, Parathion A, Parathion M, Permethrin, Phenthoat, Phorat, Phosalon, Phosmet, Phosphamidon, Phoxim, Pirimicarb, Pirimiphos M, Pirimiphos A, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyrimidifen, Pyriproxifen, Quinalphos, Salithion, Sebufos, Silafluofen, Sulfotep, Sulprofos, Tebufenozide, Tebufenpyrad, Tebupirimiphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb, Vamidothion, XMC, Xylylcarb, Zetamethrin, substituierte Propargylamine, wie in DE 102 17 697 dargestellt, Dihalogenpropen-Verbindungen, wie in DE 101 55 385 dargestellt, Pyrazolylbenzylehter, wie in DE 199 61 330 dargestellt, Pyrazol-Derivate, wie in DE 696 27 281 dargestellt.

Beispiele für Herbizide:

Anilide, wie z. B. Diflufenican und Propanil; Arylcarbonsäuren, wie z. B. Dichlorpicolinsäure, Dicamba und Picloram; Aryloxyalkansäuren, wie z. B. 2,4-D, 2,4-DB, 2,4-DP, Fluroxypyr, MCPA, MCPP und Triclopyr; Aryloxyphenoxyalkansäureester, wie z. B. Diclofop-methyl, Fenoxapropethyl, Fluazifopbutyl, Haloxyfop-methyl und Quizalofop-ethyl; Azinone, wie z. B. Chloridazon und Norflurazon; Carbamate, wie z. B. Chlorpropham, Desmedipham, Phenmedipham und Propham; Chloracetanilide, wie z. B. Alachlor, Acetochlor, Butachlor, Metazachlor, Metolachlor, Pretilachlor und Propachlor; Dinitroaniline, wie z. B. Oryzalin, Pendimethalin und Trifluralin; Diphenylether, wie z. B. Acifluorfen, Bifenox, Fluoroglycofen, Fomesafen, Halosafen, Lactofen und Oxyfluorfen; Harnstoffe, wie z. B. Chlortoluron, Diuron, Fluometuron, Isoproturon, Linuron und Methabenzthiazuron; Hydroxyiamine, wie z. B. Alloxydim, Clethodim, Cycloxydim, Sethoxydim und Tralkoxydim; Imidazolinone, wie z. B. Imazethapyr, Imazamethabenz, Imazapyr und Imazaquin; Nitrile, wie z. B. Bromoxynil, Dichlobenil und loxynil; Oxyacetamide, wie z. B. Mefenacet; Sulfonylharnstoffe, wie z. B. Amidosulfuron, Bensulfuronmethyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z. B. Butylate, Cycloate, Diallate, EPTC, Esprocarb, Molinate, Prosulfocarb, Thiobencarb und Triallate; Triazine, wie z. B. Atrazin, Cyanazin, Simazin, Simetryne, Terbutryne und Terbutylazin; Triazinone, wie z. B. Hexazinon, Metamitron und Metribuzin; Sonstige, wie z. B. Aminotriazol, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate und Tridiphane.

Als Beispiele für Pflanzenwuchsregulatoren seien Chlorcholinchlorid und Ethephon genannt.

Unter "landwirtschaftlichem Wirkstoff" werden dabei Zusammensetzungen verstanden, die mindestens einen der oben genannten Stoffe enthalten.

Als Beispiele für Pflanzennährstoffe seien übliche anorganische oder organische Dünger zur Versorgung von Pflanzen mit Makro- und/oder Mikronährstoffen genannt.

Als Zusatzstoffe, die in den erfindungsgemässen landwirtschaftlichen Wirkstoffen bekannterweise enthalten sein können, kommen alle üblichen in derartigen Zubereitungen einsetzbaren Stoffe in Frage. Vorzugsweise in Betracht kommen Füllstoffe, aus der Kunststoff-Technologie bekannte Schmier- und Gleitmittel, Weichmacher und Stabilisierungsmittel.

Als Beispiele für Füllstoffe seien genannt:

Kochsalz, Carbonate, wie Calciumcarbonat oder Natriumhydrogencarbonat, ferner Aluminiumoxide, Kieselsäuren, Tonerden, gefälltes oder kolloidales Siliciumdioxid, sowie Phosphate.

Als Beispiele für Schmier- und Gleitmittel seien genannt:

Magnesiumstearat, Stearinsäure, Talkum und Bentonite.

Als Weichmacher in Frage kommen alle Stoffe, die in üblicherweise für diesen Zweck bei Polyesteramiden verwendet werden.

Als Beispiele genannt seien Ester von Phosphorsäure, Ester von Phthalsäure, wie Dimethylphthalat und Dioctylphthalat, und Ester von Adipinsäure, wie Diisobutyladipat, ferner Ester von Azelainsäure, Apfelsäure, Citronensäure, Maleinsäure, Ricinolsäure, Myristinsäure, Palmitinsäure, Ölsäure, Sebacinsäure, Stearinsäure und Trimellithsäure, sowie komplexe lineare Polyester, polymere Weichmacher und epoxydierte Sojabohnenöle.

Als Stabilisierungsmittel kommen Antioxidantien und Stoffe in Frage, welche die Polymere vor unerwünschtem Abbau während der Verarbeitung schützen.

Als Farbstoffe können in den erfindungsgemässen Wirkstoffen alle für landwirtschaftliche Wirkstoffe üblicherweise einsetzbaren Farbstoffe enthalten sein. Die Konzentrationen an den einzelnen Komponenten können in den landwirtschaftlichen Wirkstoffen innerhalb eines größeren Bereiches variiert werden.

Des Weiteren können optional UV-Schutzstoffe in die Fasern eingebaut werden, um beispielsweise UV-instabile Pheromone zu schützen. Geeignete Schutzstoffe sind beispielsweise, aber nicht erschöpfend, aromatische Verbindungen wie 2,6-Di-tert.butyl-4-methylphenol oder aromatische Amine.

Bevorzugt bestehen die erfindungsgemäßen Nano- und/oder Mesopolymerfasern aus bioabbaubaren Polymeren.

Unter biologisch abbaubar wird dabei verstanden, dass eine Verbindung (hier: das Homo- oder Copolymer, aus dem die Nano- und/oder Mesofasern bestehen) durch Enzyme und/oder Mikroorganismen in kleinere Abbauprodukte zerlegt wird. Der Abbau kann in einer Klär- oder Kompostieranlage vonstatten gehen oder auch auf der landwirtschaflichen Nutzfläche, auf der die erfindungsgemäßen Vorrichtungen aufgebracht sind. Im letztgenannten Fall werden die biologisch abbaubaren Polymere so gewählt, dass sie erst nach dem Ende der Vegetationsperiode vollständig abgebaut sind. Bevorzugt beginnt der Abbau erst kurz vor dem Ende der Vegetationsperiode oder zu Beginn der Ruheperiode der Pflanzen, die mit den erfindungsgemäßen Vorrichtungen vor Schädlingsbefall geschützt werden sollen.

In einer bevorzugten Ausführungsform handelt es sich bei den Nano- und/oder Mesofasern um elektrogesponnene Fasern.

In einer weiteren Ausführungsform handelt es sich bei dem Dispenser um ein Hagelschutznetz.

In einer weiteren Ausführungsform wird der landwirtschaftliche Wirkstoff ausgewählt aus der Gruppe Pheromone, Kairomone und Signalstoffe.

In einer weiteren Ausführungsform handelt es sich bei der erfindungsgemäßen Vorrichtung um mit Pheromonen beladene Nano- und/oder Mesofasern, die auf einem Hagelschutznetz aufgebracht sind.

Die Aufgabe, ein Verfahren zur Herstellung der erfindungsgemäßen Vorrichtung bereitzustellen, wird gelöst durch ein Verfahren umfassend folgende Schritte:

a) Mischen des landwirtschaftlichen Wirkstoffs mit dem Polymer oder den Polymeren in einem Lösungsmittel oder als Schmelze,
b) Aufbringen des Dispensers auf die Gegenelektrode einer Elektrospinnapparatur,
c) Abscheiden des Polymer-Wirkstoff-Gemisches auf dem Dispenser mit Hilfe des Elektrospinnverfahrens.

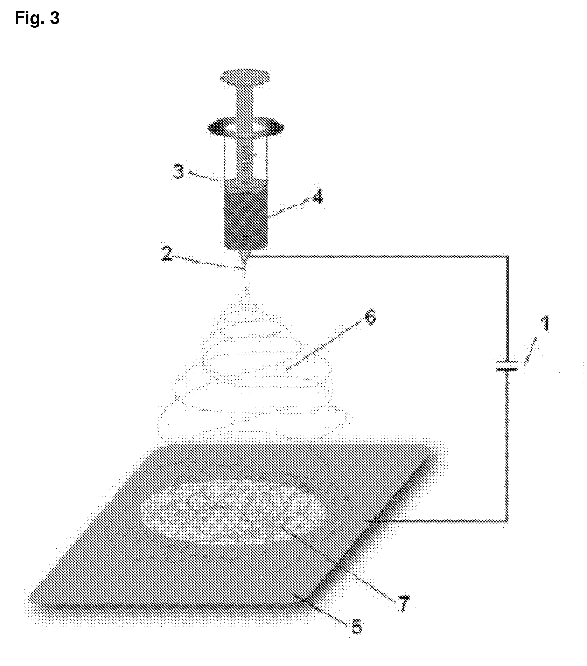

Die erfindungsgemäße Vorrichtung zur Ausbringung landwirtschaftlicher Wirkstoffe umfassend einen Dispenser und mit landwirtschaftlichen Wirkstoffen beladene, nicht wasserlösliche Nano- und/oder Mesofasern wird hergestellt, indem das mindestens eine Trägermaterial auf die Gegenelektrode 7 einer Elektrospinnapparatur (wie in Fig. 3 gezeigt) aufgebracht und darauf mit Hilfe des Elektrospinnverfahrens mindestens die mit dem landwirtschaftlichen Wirkstoff beladene Nano-und/oder Mesofasern abgeschieden wird. Dabei muss das zu bespinnende Material die Gegenelektrode nicht zwangsläufig berühren. Alternativ kann das zu bespinnende Material auch in einem kontinuierlichen Prozess berührungslos über die Elektrodenoberfläche hinweggeführt werden.

In einer Ausführungsform werden das Polymer bzw. die Polymere, aus denen die Nano- und/oder Mesofasern hergestellt werden soll, vor dem Elektroverspinnen gemäß Schritt a) in mindestens einem Lösungsmittel gelöst. Unter "löslich" wird dabei verstanden, dass das Polymer bzw. die Polymere eine Löslichkeit von mindestens jeweils 1 Gew.-% in dem entsprechenden Lösungsmittel aufweisen. Der landwirtschaftliche Wirkstoff wird entweder ebenfalls in einem Lösungsmittel (bevorzugt demselben) gelöst und die beiden Lösungen anschließend miteinander vermischt, oder der Wirkstoff wird in der Lösung des Polymers oder der Polymere gelöst.

Dem Fachmann ist bekannt, welche Polymere in welchem Lösungsmittel oder Lösungsmittelgemisch löslich im Sinne obiger Definition sind. Er kann dieses Wissen anwenden, ohne den Schutzbereich der Patentansprüche zu verlassen.

Geeignete Lösungsmittel sind beispielsweise, aber nicht erschöpfend:

- Wasser,
- aliphatische Alkohole, beispielweise Methanol, Ethanol, n-Propanol, 2-Propanol, n-Butanol, iso-Butanol, tert.-Butanol, Cyclohexanol,
- bei Raumtemperatur flüssige Carbonsäuren, beispielsweise Ameisensäure, Essigsäure, Trifluoressigsäure
- Amine, beispielsweise Diethylamin, Diisopropylamin, Phenylethylamin,
- polar aprotische Lösungsmittel, beispielsweise Aceton, Acetylaceton, Acetonitril, Essigsäureethylester, Diethylenglykol, Formamid, Dimethylformamid (DMF), Dimethylsulfoxid (DMSO), Dimethylacetamid, N-Methylpyrrolidon (NMP), Pyridin, Benzylalkohol,
- halogenierte Kohlenwasserstoffe, beispielsweise Dichlormethan, Chloroform,
- unpolare aliphatische Lösungsmittel, beispielsweise Alkane, ausgewählt aus Hexan, Heptan, Octan und Cycloalkane, ausgewählt aus Cyclopentan, Cyclohexan, Cycloheptan,
- unpolare aromatische Lösungsmittel, beispielsweise Benzol, Toluol
- ionische Flüssigkeiten.

In einer weiteren Ausführungsform wird in Schritt a) eine Polymerschmelze hergestellt und der landwirtschaftliche Wirkstoff in dieser Schmelze gelöst. Diese Ausführungsform eignet sich für solche Polymere und landwirtschaftliche Wirkstoffe, welche thermisch hinreichend stabil sind. Dem Fachmann ist bekannt, welche Polymere und landwirtschaftlichen Wirkstoffe die erforderliche thermische Stabilität aufweisen. Er kann dieses Wissen anwenden, ohne den Schutzbereich der Patentansprüche zu verlassen. So sind beispielsweise Pheromone im Vakuum und unter Sauerstoffausschluss bis zu etwa 180 °C thermisch stabil.

Erfolgt das Elektrospinnen aus Polymerlösungen, so beträgt der Polymeranteil dieser Lösungen vorteilhaft 1 Gew.-% bis 25 Gew.-%.

In den fertigen, mit Wirkstoffen beladenen nicht wasserstabilen Nano- oder Mesopolymerfasern beträgt der Anteil des landwirtschaftlichen Wirkstoffs bis zu 50 Gew.-%.

Die erfindungsgemäß einzusetzende Polymerlösung kann auf alle dem Fachmann bekannten Arten elektroversponnen werden, beispielsweise durch Extrusion der Lösung unter geringem Druck durch eine mit einem Pol einer Spannungsquelle verbundene Kanüle auf einem in Abstand zu dem Kanülenausgang angeordnete Gegenelektrode. Auf dieser Gegenelektrode befindet sich der Dispenser. Vorzugsweise wird der Abstand zwischen der Kanüle und der als Kollektor fungierenden Gegenelektrode sowie die Spannung zwischen den Elektroden so gewählt, dass sich zwischen den Elektroden ein elektrisches Feld von vorzugsweise 0,5 bis 2 kV/cm einstellt. Es bildet sich ein auf die Gegenelektrode gerichteter Materialstrom, der sich auf dem Weg zur Gegenelektrode verfestigt.

Gute Ergebnisse werden insbesondere erhalten, wenn der Durchmesser der Kanüle 50 μm bis 500 μm beträgt.

In einer Ausführungsform des erfindungsgemäßen Verfahrens wird eine Elektrospinningvorrichtung vorgeschlagen, welche eine Spannungsquelle aufweist, die Spannungen zwischen 1 und 100 kV abgeben kann, sowie eine damit elektrisch verbundene Düse/Spitze/Spritze. Vorzugsweise weist die Vorrichtung Mittel zur Einlagerung oder/und Mischung der eingesetzten Polymere, Lösungsmittel und landwirtschaftlichen Wirkstoffe auf.

In einer weiteren Ausführungsform weist die erfindungsgemäße Vorrichtung zur verbesserten Steuerung des Ausbringungsprozesses mindestens eine mit der Vorrichtung mechanisch oder/und elektrisch verbundene Gegenelektrode auf, welches ein anderes elektrisches Potential als die als erste Elektrode genutzte Düse oder Spitze zum Durchlass des/der Polymeren aufweist.

In einem weiteren vorteilhaften Ausführungsbeispiel ist vorgesehen, dass coaxial zur ersten, dann inneren Düse/Spitze/Spritze eine zweite, dann äußere Düse/Spitze/Spritze vorgesehen ist. Jede der beiden Düsen/Spitzen/Spritzen kann zur Zuführung von Polymeren in Lösung mit einem eigenen oder mit einem gemeinsamen Vorratsbehälter verbunden sein. Darüberhinaus können auch Vorratsbehälter für die Wirkstoffe vorgesehen sein.

Vorzugsweise weist die Vorrichtung darüber hinaus Druckmittel auf, welche einen oder beide der vorgesehenen Behälter unter Druck setzt, um der/den Düsen/Spritzen/Spitzen Polymere und/oder Wirkstoffe zuzuführen. Die Vermischung oder Vermengung der Polymere mit den Wirkstoffen kann dabei im Vorratsbehälter oder auf dem Strömungsweg zur Düse, etwa durch so gestaltete Ausbildung des gemeinsamen Strömungsweges von Polymer und Wirkstoff hin zur Spitze der Vorrichtung, dass Turbulenzen in der Strömung und damit eine Vermischung von Polymer und Wirkstoff zu beobachten sind.

Die beiden Düsen oder Spitzen der Vorrichtung weisen dabei das gleiche elektrische Potential auf. Zur Herstellung von mehrschichtigen Fasern kann die Vorrichtung weitere Düsen oder Spitzen aufweisen, welche um die jeweils innere angeordnet sind.

Für das Gelingen des erfindungsgemäßen Verfahrens sind im Hinblick auf die Elektrospinnapparatur lediglich eine Spannungsquelle und eine damit elektrisch verbundene Düse, Spitze/Spritze für den Durchtritt des Polymers unverzichtbar. Vorzugsweise ist noch mindestens ein mit der Düse in Verbindung stehender Vorratsbehälter für das Polymer und den Wirkstoff, ggf. mit Mitteln zum Mischen vorgesehen.

Für die verbesserte Kontrolle des Durchtritts des Polymer-Wirkstoff-Gemisches ist eine Druckvorrichtung vorgesehen, welche auf das Gemisch einen Druck in Richtung zur Austrittsöffnung der Düse ausübt. Diese Druckvorrichtung kann zur optimalen Kontrolle der Durchflussgeschwindigkeit des Gemisches mit einer Regelvorrichtung verbunden sein, welche selbst mit einem Signalgeber, wie Durchfluss-oder Strömungsgeschwindigkeitssensor verbunden ist.

Somit kann in Abhängigkeit von den tatsächlichen Werten des Durchflusses oder der Strömungsgeschwindigkeit in der Düse oder Düsenspitze oder in Abhängigkeit von der oder den Temperaturen der Schmelze/des Gemisches/der Lösung die kontinuierliche Ausbringung von gleich bleibenden nanoskaligen Polymerfasern (mit oder ohne Wirkstoff) geregelt werden.

In einem weiteren Ausführungsbeispiel kann die Vorrichtung Mittel zur Messung und Steuerung oder/und Regelung der ausgetragenen Trägermenge (Masse, Volumen oder Fläche der nanoskaligen Fasern oder Röhren) aufweisen, z. B. in Form einer Waage oder in Form optischen Erkennungsmitteln z. B. in Verbindung mit einen Durchflussmesser (welcher auch in Form eines induktiven Durchflussmessers zur Reduktion des Strömungswiderstand ausgelegt sein kann) aufweist. Alternativ kann auch ein Strömungsgeschwindigkeitsmesser in Verbindung mit dem bekannten Düsendurchmesser Aufschluss über die pro Zeiteinheit abgegebene Trägermenge in Form der nanoskaligen Fasern oder Röhren geben. Diese Mittel könnten insbesondere zur Kalibrierung der Vorrichtung eingesetzt werden, um so vor Beginn des Aufbringens von Nano- und/oder Mesofasern und Wirkstoffen auf den Dispenser jeweils die richtigen Parameter für die gewünschte Ausbringung pro Zeit oder Fläche einzustellen.

Ein weiteres vorteilhaftes Ausführungsbeispiel sieht vor, dass eine Vorrichtung zur Erzeugung des elektrischen Potentials eine Vorrichtung zur Erzeugung eine Hochspannungswechselfeldes zwischen der ersten Elektrode (Düse der Vorrichtung) und der Gegenelektrode (oder -elektroden, d.h. der oder den Dispensern) erzeugt. Damit kann der Grad der "Verschlingung" mit der Zielfläche durch die Fasern erhöht werden.

Dieses Wechselfeldes kann auch mechanisch und vorzugsweise durch eine oder mehrere bewegliche, vorzugsweise rotierende Düsen in Form von Haken- oder stabförmigen Elektroden erzeugt werden.

In einer besonders bevorzugen Ausführungsform weist die Elektrospinnvorrichtung zwei oder mehrere coaxial zueinander angeordnete Düsen zum Austritt des/der Polymer/en auf. Vorzugsweise liegen die Austrittsöffnungen aller dieser Düsen in einer Ebene und weisen das gleiche elektrische Potential auf, so dass mittels dieser Düsen ein Co-Elektrospinning durchführbar ist, so dass eine Kern-und eine Hüllfaser herstellbar sind.

In einer weiteren Ausführungsform weist die Vorrichtungen andere Mittel zur Beschichtung der aus der ersten Düse (d.h. der ersten Elektrode) austretenden nanoskaligen Fadens auf. Diese Mittel sind vorzugsweise die bekannten Mittel zur Durchführung von Dünnschicht-Depositionsverfahren, z.B. die Mittel der Sputtertechnik, der chemischen Abscheidung aus Gasphasen (CVD, MOCVD), der Aufdampftechniken und der Pyrolyse.

Die erfindungsgemäßen Nano- und/oder Mesofasern oder -Hohlfasern weisen eine Oberfläche von 100 bis 700 g/m$^2$ sowie Durchmesser von 10 nm bis 2 $\mu$m und Längen von 1 $\mu$m bis hin zu einigen Metern auf. Bevorzugt sind Durchmesser von 10 nm bis 1 $\mu$m.

Dem Fachmann ist bekannt, wie er den Faserdurchmesser einstellen kann. So wird beispielsweise der Faserdurchmesser um so größer, je viskoser, d.h. je konzentrierter die zu verspinnende Polymerlösung ist. Je höher die Flussrate der Spinnlösung pro Zeiteinheit ist, desto größer ist der Durchmesser der erhaltenen elektrogesponnenen Fasern. Des Weiteren hängt der Faserdurchmesser von der Oberflächenspannung und der Leitfähigkeit der Spinnlösung ab. Dies ist dem Fachmann bekannt, und er kann diese Kenntnisse anwenden, ohne den Schutzbereich der Patentansprüche zu verlassen.

Optional kann es sich bei um Hohlfasern handeln. Hohlfasern lassen sich herstellen, indem in einem ersten Schritt eine massive Faser aus einem abbaubaren Polymer hergestellt wird. Anschließend wird diese Faser mit einem zweiten, nicht abbaubaren Material beschichtet. Optional können auch mehrere Schichten aus gleichen oder unterschiedlichen nicht abbaubaren Materialien aufgebracht werden. Anschließend wird die erste, massive Faser entfernt, z.B. thermisch, mittels Bestrahlung oder mit einem Lösungsmittel. Zurück bleibt eine Hohlfaser, deren Innenwandung aus dem zweiten, nicht abbaubaren Material und deren Außenwandung aus dem zuletzt aufgebrachten nicht abbaubaren Material besteht. Es ist ohne Weiteres ersichtlich, dass im Rahmen der vorliegenden Erfindung Hohlfasern nur dann zum Einsatz kommen, wenn der zu verwendende landwirtschaftliche Wirkstoff während des Herstellungsprozesses dieser Hohlfasern weder zerstört noch entfernt wird.

Die erfindungsgemäße Vorrichtung kann verwendet werden, um landwirtschaftliche Wirkstoffe zeitlich und räumlich getrennt von der Herstellung dieser Vorrichtung an ihren Wirkort zu bringen. Bevorzugt handelt es sich hierbei um eine Nutzfläche aus dem Obst- oder Weinbau, dem Gartenbau oder einer kommerziellen Reihenkultur.

Dabei kann die Ausbringung manuell oder mechanisiert erfolgen. Bei Bedarf können die erfindungsgemäßen Vorrichtungen an oder zwischen den Pflanzen befestigt werden. Methoden der Befestigung von Trägern landwirtschaftlicher Wirkstoffe sind dem Fachmann bekannt. So können die Ausbringung und das Anheften der erfindungsgemäßen Vorrichtungen beispielsweise mit Hilfe eines modifizierten Laubhefters erfolgen, wie er im Weinbau gebräuchlich ist. Erfindungsgemäß werden statt des Heftgarns für das Laub die Nano- und/oder Mesofasern mit dem Trägermaterial an den Weinreben oder Obstbäumen verteilt und befestigt. Alternativ könnten die erfindungsgemäß mit Nano- und/oder Mesofasern und landwirtschaftlichen Wirkstoffen beladenen Dispenser quasi "unendlich" auf eine Rolle aufgewickelt und dann entlang einer gesamten Obstbaum- oder Rebzeile abgewickelt werden.

Besonders bevorzugt werden die erfindungsgemäßen Vorrichtungen zur Arthropodenregulation, z.B. im Obst- oder Weinbau, im Gartenbau und in Reihenkulturen verwendet. Zu den Reihenkulturen zählen beispielsweise Baumwolle, Mais und Reis sowie bevorzugt Mandeln, Nüsse und Pistazien.

Es werden Pheromone, Kairomone oder Signalstoffe in einer abhängig vom betrachteten Schaderreger bestimmten Menge im Feld ausgebracht. Dies hat zur Folge, dass sich die männlichen Schadorganismen nicht mehr auf die weiblichen hin orientieren können und folglich keine Begattung erfolgt. Es werden keine befruchteten Eier abgelegt und somit erfolgt eine Reduktion der Schaderregerpopulation. Dieses Verwirrverfahren ("mating disruption") arbeitet so effektiv, dass Applikationen von Insektiziden, die sich i.d.R. gegen die Larven richten, ersetzt werden können. Pheromone und Kairomone und Signalstoffe sind Naturstoffe, von denen keine schädlichen Nebenwirkungen für Mensch oder Umwelt bekannt sind und nur auf den Zielorganismus wirken. Auch sind keine Resistenzerscheinungen zu erwarten, wie sie oftmals bei chemisch-synthetischen Pflanzenschutzmitteln auftreten. Das Verwirrverfahren mit diesen Wirkstoffen ist also eine sehr umweltfreundliche Methode des Pflanzenschutzes.

**Ausführungsbeispiele**

**Ausführungsbeispiel:**

**Käfigversuche zur Ermittlung der Eignung von Polymervliesen als Pheromondispenser im Weinbau**

Der Käfigversuch ist ein Standardverfahren zur Prüfung von Stoffen, die im Weinbau großflächig zur Paarungsstörung ausgebracht werden sollen. Bei den zu prüfenden Mitteln wird auf diese Weise festgestellt, ob die dargereichte Formulierung eine biologische Wirkung zeigt.

Versuchsbedingungen

Die Prüfung erfolgte im Rebanlagen mit ortsüblichen Sorten. Als Prüforganismen dienten je nach zu prüfender Indikation:

- *Eupoecilia ambiguella* (Einbindiger Traubenwickler)
- *Lobesia botrana* (Bekreuzter Traubenwickler)

Die Prüfung der biologischen Wirksamkeit erfolgte ausschließlich im Freiland. Für die Versuchsflächen sind Rebanlagen vorgesehen, in denen erfahrungsgemäß mit Befall zu rechnen ist.

Versuchsprinzip

Eine definierte Anzahl männlicher Wickler wurde durch eine natürliche Pheromonquelle (unbegattete Weibchen) angelockt. Die Weibchen werden in kleinen Siebkäfigen so über einem Leimboden platziert, dass Männchen, welche die Weibchen erfolgreich gefunden haben, auf dem Leimboden gefangen werden. Wird um den Käfig herum ein Pheromonpräparat angewendet, sollten die Männchen die Weibchen nicht mehr gezielt anfliegen können.

Je geringer in einem Käfig innerhalb eines Pheromonverwirrungsgebietes die Zahl der gefangenen Männchen ist, umso besser funktioniert die Paarungsstörung (Vergleich mit Käfig in einem unverwirrten Bereich als Kontrolle).

Versuchsanlage

Art des Käfigs

- Die Flugkäfige sind aus Metallgitter hergestellt.
- Die Maschenweite ermöglicht einen freien Luftzug, verhindert jedoch das

Durchfliegen der Wickler.

- Die Käfiggröße beträgt ca. 5 m$^3$.

- Der Käfig wird über einer Rebzeile installiert.
- Im Käfig befinden sich zwei Fallen, in denen je zwei lebende, unbegattete Weibchen als Köder gehalten werden. Die Fallen sind mit einem Klebeboden ausgestattet, an dem alle Männchen hängenbleiben, die erfolgreich die lockenden Weibchen gefunden haben.

Freisetzung und Bonitur

- Pro Variante (Polymervlies, Kontrolle, ggf. Vergleichsmittel) wird ein Käfig aufgestellt.
- Um den Käfig der Versuchsvariante herum werden Polymervliese auf einer Fläche von 0,2 ha (= 2.000 m$^2$) ausgebracht. Diese Fläche ist normalerweise mit 100 konventionellen Dispensern (RAK oder Isonet) bestückt.
- In jeden Käfig werden jeweils zwei Fallen mit je zwei lebenden, unbegatteten Weibchen gehängt sowie 40 im Labor gezüchtete Traubenwickler-Männchen pro Käfig und Freilassung ausgesetzt.
- Drei bis sieben Tage nach der Freilassung (je nach Witterung) wird die Zahl der auf den Klebeböden zurückgefangenen Tiere notiert.
- Anschließend erfolgt der Austausch der Weibchen in den Köderfallen und die erneute Freilassung von 40 Traubenwickler-Männchen.
- Drei bis sieben Tage nach der zweiten Freilassung wird erneut die Zahl der auf den Klebeböden zurückgefangenen Tiere notiert.
- In der Regel erfolgt eine dritte Freilassung mit anschließender Kontrolle.
- Die Rückfangquote wird im Vergleich zur Kontrollvariante errechnet (s.u.).

Die Tiere, die in Versuch und Kontrolle eingesetzt wurden, waren von gleicher Herkunft und gleichem Alter. Der Ort für den Kontrollkäfig wird so gewählt, dass keine Beeinflussung durch künstliche Pheromonquellen vorliegt.

Meteorologische Daten

Kontinuierliche Wetteraufzeichnungen der nächstgelegenen Wetterstation während der Versuchsphase wurden durchgeführt und stehen für die Interpretation der Versuchsergebnisse zur Verfügung.

Ermittlung der Rückfangquote bei Käfigversuchen

Als Rückfang dient die Anzahl der auf dem Leimboden / Klebeboden der Weibchenfalle klebenden Männchen. Die Rückfangquote Q ist der von der tatsächlich eingesetzten Anzahl von Faltermännchen unabhängige Prozentwert, der es ermöglicht, verschiedene Versuche und Prüfsubstanzen miteinander zu vergleichen.

Bei Q = 100% unterscheidet sich eine Prüfsubstanz nicht von der Kontrolle. Je geringer Q ist, desto besser funktioniert die Paarungsstörung.

$$Q = R\ /\ Rk * 100[\%]$$

Q = Rückfangquote, R = Rückfänge in Prüfvariante, Rk = Rückfänge in Kontrolle

Ergebnis des Käfigversuchs im Freiland

1. Versuch, 1. Wiederholung

Ecoflex®-Nanofasern mit Traubenwickler-Pheromon als Dispenser; ausgebrachte Menge auf 2.000 m$^2$ Versuchsfläche: 200 g Nanofasern mit Pheromongehalt von 33 %, vor Ausbringung auf ein Hagelschutznetz gesponnen; Verteilung von 100 Abschnitten (1,5 m lang) des mit Nanofasern besponnenen Hagelschutznetzes auf den 2.000 m$^2$ Versuchsfläche um den Käfig herum.

1. Versuch, 2. Wiederholung

Die zweite Wiederholung wurde ebenso wie die erste durchgeführt.

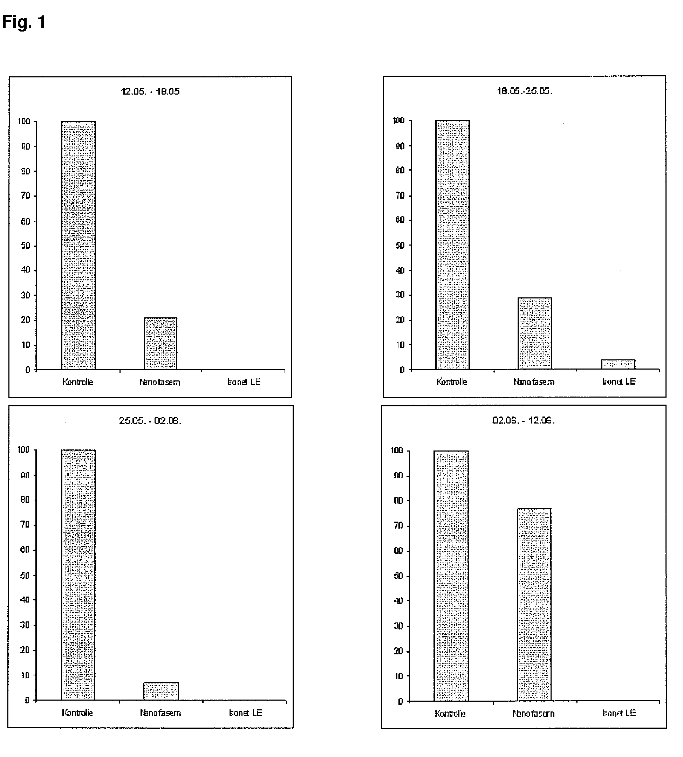

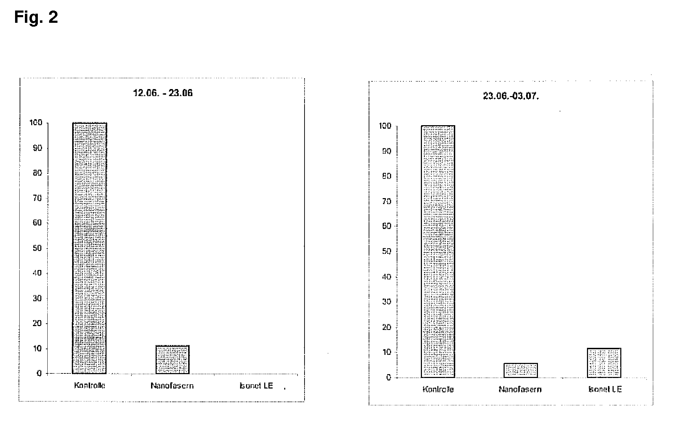

Die Ergebnisse beider Wiederholungen sind in den Fig. 1 und 2 graphisch dargestellt.

In der ersten Wiederholung des Versuchs (siehe auch Fig. 1) ist in den ersten drei Wochen ein guter Verwirrungseffekt zu beobachten. Erst in der vierten Woche ist keine ausreichende Wirksamkeit mehr zu erkennen. Diese Ergebnisse lassen sich in der zweiten Wiederholung reproduzieren.

Ecoflex® ist ein bioabbaubarer, statistischer, aliphatisch-aromatischer Copolyester, der auf den Monomeren 1,4-Butandiol und Adipinsäure sowie Terephthalsäure als Verbundzusatzstoff basiert.

Isonet LE® ist ein handelsübliches Pheromon aus 52% (7E,9Z)-Dodecadienylacetat und 48% (Z)-9-Dodecenylacetat.

**Bezugszeichenliste**

1 Spannungsquelle
2 Kapillardüse
3 Spritze
4 Spinnlösung
5 Gegenelektrode
6 Faserbildung
7 Faservlies

**Abbildungslegenden**

**Fig. 1**

1. Versuch, 1. Wiederholung:

Ecoflex®-Nanofasern mit Traubenwickler-Pheromon als Dispenser; ausgebrachte Menge auf 2.000 m$^2$ Versuchsfläche: 200 g Nanofasern mit Pheromongehalt von 33 %, vor Ausbringung auf ein Hagelschutznetz gesponnen; Verteilung von 100 Abschnitten (1,5 m lang) des mit Nanofasern besponnenen Hagelschutznetzes auf den 2.000 m$^2$ Versuchsfläche um den Käfig herum.

Die Säulen in den Graphen geben jeweils die Rückfangquote der in den Käfigen ausgesetzten Männchen wieder. Die Rückfänge in den unbehandelten Kontrollen werden gleich 100% gesetzt und die Rückfänge in der Nanofaservariante und der Variante mit dem Standarddispenser darauf bezogen.

**Fig. 2**

1. Versuch, 2. Wiederholung:

Die Versuchsbedingungen wurden wie unter Fig. 1 beschrieben gewählt und die graphische Darstellung erfolgte analog zur 1. Wiederholung.

**Fig. 3**
Fig 3 zeigt eine schematische Darstellung einer zur Durchführung des erfindungsgemäßen Elektrospinnverfahrens geeigneten Vorrichtung.
Die Vorrichtung umfasst eine Spritze **3,** an deren Spitze sich eine Kapillardüse **2** befindet. Diese Kapillardüse **2** ist mit einem Pol einer Spannungsquelle **1** verbunden. Die Spritze **3** nimmt die zu verspinnenden Polymerlösungen **4** auf. Gegenüber dem Ausgang der Kapillardüse **2** ist in einem Abstand von etwa 20 cm eine mit dem anderen Pol der Spannungsquelle **1** verbundene Gegenelektrode **5** angeordnet, die als Kollektor für die gebildeten Fasern fungiert.
Während der Betriebs der Vorrichtung wird an den Elektroden **2** und **5** eine Spannung zwischen 15 kV und 150 kV eingestellt und die Polymerlösung **4** unter einem geringen Druck durch die Kapillardüse **2** der Spritze **3** ausgetragen. Auf Grund der durch das starke elektrische Feld von 0,5 bis 2 kV/cm erfolgenden elektrostatischen Aufladung der Polymere in der Lösung entsteht ein auf die Gegenelektrode **5** gerichteter Materialstrom, der sich auf dem Wege zur Gegenelektrode **5** unter Faserbildung **6** verfestigt, infolge dessen sich auf der Gegenelekrode **5** Fasern **7** mit Durchmessern im Mikro- und Nanometerbereich abscheiden.

**Patentansprüche**

1. Vorrichtung zur Ausbringung landwirtschaftlicher Wirkstoffe, wobei die Vorrichtung zeitlich und räumlich getrennt von ihrem Herstellungsprozess an den Wirkort gebracht werden kann, umfassend einen Dispenser sowie mit landwirtschaftlichen Wirkstoffen beladene, nicht wasserlösliche Nano- und/oder Mesofasern.

2. Vorrichtung gemäß Anspruch 1, **dadurch gekennzeichnet, dass** es sich bei den Nano- und/oder Mesofasern um elektrogesponnene Nano- und/oder Mesofasern handelt.

3. Vorrichtung gemäß einem der Ansprüche 1 bis 2, **dadurch gekennzeichnet, dass** der landwirtschaftliche Wirkstoff ausgewählt wird aus der Gruppe Pheromone, Kairomone und Signalstoffe.

4. Vorrichtung gemäß einem der Ansprüche 1 bis 3, **dadurch gekennzeichnet, dass** es sich bei dem Dispenser um ein Hagelschutznetz handelt.

5. Verfahren zur Herstellung der Vorrichtung gemäß einem der Ansprüche 1 bis 4 umfassend folgende Schritte:

   a) Mischen des landwirtschaftlichen Wirkstoffs mit dem Polymer oder den Polymeren in einem Lösungsmittel oder als Schmelze,
   b) Aufbringen des Dispensers auf die Gegenelektrode einer Elektrospinnapparatur,
   c) Abscheiden des Polymer-Wirkstoff-Gemisches auf dem Dispenser mit Hilfe des Elektrospinnverfahrens.

6. Verwendung von Vorrichtungen gemäß einem der Ansprüche 1 bis 4 zur Ausbringung landwirtschaftlicher Wirkstoffe in Nutzflächen aus dem Obst-und Weinbau, dem Gartenbau und der Reihenkultur. Verwendung gemäß Anspruch 6, **dadurch gekennzeichnet, dass** landwirtschaftliche Wirkstoffe zur Arthropodenregulation ausgebracht werden.

**Fig. 1**

**Fig. 2**

**Fig. 3**

Europäisches
Patentamt

European
Patent Office

Office européen
des brevets

**EUROPÄISCHER RECHERCHENBERICHT**

Nummer der Anmeldung

EP 09 17 3695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2005/115143 A1 (UNIV MARBURG PHILIPPS) 8. Dezember 2005 (2005-12-08) | 1-3,6 | INV.<br>D01F1/10 |
| A | * das ganze Dokument * | 4,5 | D01F6/84<br>D01D5/00 |
| A | WO 2009/045042 A1 (AMOSENSE CO LTD [KR]; KIM CHAN [KR]; YUN WOO-YEON [KR]; YANG SUNG-CHUL) 9. April 2009 (2009-04-09) <br>* Seite 9, Zeile 2 - Seite 12, Zeile 21; Ansprüche 1-16; Abbildungen 1-4 *<br>* Seite 14, Zeilen 5-20 * | 1,2 | A01N25/10<br>A01N25/34<br>A01G13/02 |
| A | EP 1 564 242 A1 (MINERA CATALANO ARAGONESA SA [ES]) 17. August 2005 (2005-08-17) <br>* das ganze Dokument * | 1-6 | |
| A | EP 1 470 823 A1 (ROHM & HAAS [US]) 27. Oktober 2004 (2004-10-27) <br>* Absatz [0023] * | 1 | |
| A | STACY A.JOHNSON ET AL: "Polymer Mesofibres"<br>JOURNAL OF MATERIAL CHEMISTRY,<br>Bd. 8, Nr. 1, 1998, Seiten 13-14,<br>XP002587961<br>Cambridge, UK  DOI: 10.1039/a706791g<br>* das ganze Dokument * | 1 | **RECHERCHIERTE SACHGEBIETE (IPC)**<br>D01F<br>D01D<br>A01N<br>A01M<br>A01G |
| A | US 2006/231000 A1 (EASTIN JOHN A [US] ET AL EASTIN JOHN ALVIN [US] ET AL) 19. Oktober 2006 (2006-10-19) <br>* Absätze [0033], [0131] * | 1-6 | |

Der vorliegende Recherchenbericht wurde für alle Patentansprüche erstellt

| Recherchenort | Abschlußdatum der Recherche | Prüfer |
|---|---|---|
| München | 21. Juni 2010 | Barker, Stephan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 17 3695

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2010

| Im Recherchenbericht angeführtes Patentdokument | Datum der Veröffentlichung | Mitglied(er) der Patentfamilie | Datum der Veröffentlichung |
|---|---|---|---|
| WO 2005115143 A1 | 08-12-2005 | DE 102004026745 A1<br>EP 1755382 A1<br>US 2008213590 A1 | 22-12-2005<br>28-02-2007<br>04-09-2008 |
| WO 2009045042 A1 | 09-04-2009 | KR 20090034202 A | 07-04-2009 |
| EP 1564242 A1 | 17-08-2005 | AT 464348 T | 15-04-2010 |
| EP 1470823 A1 | 27-10-2004 | KEINE | |
| US 2006231000 A1 | 19-10-2006 | CN 101203128 A<br>US 2008071080 A1<br>US 2008060566 A1<br>US 2008121153 A1<br>US 2008066664 A1<br>US 2008060564 A1<br>ZA 200709033 A | 18-06-2008<br>20-03-2008<br>13-03-2008<br>29-05-2008<br>20-03-2008<br>13-03-2008<br>31-12-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 100234569
- DE 10023456 A1
- DE 10040897 A1
- WO 2005115143 A1
- DE 10217697
- DE 10155385
- DE 19961330
- DE 69627281


**In der Beschreibung aufgeführte Nicht-Patentliteratur**

- **Hummel, H. E. ; Metcalf, R. L.** Diabrotica barberi and D. virgifera virgifera fail to Orient Towards Sticky Traps in Maize Fields Permeated with the Plant Kairomones p-methoxyphenylethanol and p-methoxy-trans-cinnamaldehyde. *Med. Fac. Landbouww. Univ. Gent,* 1996, vol. 61-3b, 1011-1018
- **Hummel, H. E. ; Hein, D. F. ; Metcalf, R. L.** Orientation disruption of Western Corn Rootworm Beetles by Air Permeation with Host Plant Kairomone Mimics. *2nd FAO WCR/TCP Meeting and 4th International IWGO Workshop,* 28. Oktober 1997, 36
- Diabrotica beetle orientation disruption with the plant kairomone mimic 4-methoxycinnamaldehyde in Zea mays. **Wennemann, L. ; H. E. Hummel.** L. Mitt. Dtsch. Ges. allg. angew. Ent. 2001, vol. 13, 209-214
- Sehr viel Entwicklungsarbeit floss bereits in die Technologie der Dispenser. Eine kritische Übersicht über den bis 1982 erreichten Stand ist in der Monographie. 1982
- Insect pheromone technology: chemistry and applications. 724-0 zu finden. Weitere Beispiele finden sich in Hummel. ACS Symposium Series # 190. American Chemical Society, 1984
- Mating disruption of codling moth with a continuous adhesive tape carrying high densities of pheromone dispensers. Bull Insectol. Techniques in Pheromone Research. Springer, 2009, vol. 62, 7-13
- **HE Hummel ; JT Shaw ; DF Hein.** A promising biotechnical approach to pest management of the western corn rootworm in Illinois maize fields shielded with a MCA kairomone baited trap line. Mitt. dtsch. *Ges. allg. angew. Ent.,* 2006, vol. 15, 131-135
- **HE Hummel ; A Deuker ; G Leithold.** The leaf beetle Diabrotica virgifera virgifera LeConte: a merciless entomological challenge for agriculture. *IOBC/wprs Bulletin,* 2009, vol. 41, 103-110
- **HE Hummel.** Diabrotica virgifera virgifera LeConte: inconspicuous leaf beetle - formidable challenges to agriculture. *Comm. Appl. Biol. Sci.,* 2007, vol. 71, 7-32
- The current status of Diabrotica virgifera virgifera in selected european countries and emerging options for its pest management. **HE Hummel ; M Bertossa ; A Deuker.** Crop plant resistance to biotic and abiotic factors: current potential and future demands. Proceedings of the 3rd International Symposium on Plant Protection and Plant Health in Europe, Berlin, Germany. 14. Mai 2009, 338-348
- Experience with the first commercial pheromone communication disruptive for suppression of an agricultural insect pest. **Brooks, T.W. ; Doane, C.C. ; Staten, R.T.** Chemical Ecology: Odour Communication in Animals. Elservier, 1979, 375-388
- **Shorey, H. H. ; Gerber, R. G.** Use of puffers for disruption of sex pheromone communication of codling moths (Lepidoptera: Tortricidae) in walnut orchards. *Environ. Entomol,* 1996, vol. 25 (6), 1398-1400
- **D.H. Reneker.** *1. Chun, Nanotechn.,* 1996, vol. 7, 216
- **Fong, H. ; Reneker, D.H.** *J. Polym. Sci,* 1999, vol. 37, 3488
- **A Greiner ; JH Wendorff.** Electrospinning: A Fascinating Method for the Preparation of Ultrathin Fibers. *Angew Chem Int Ed,* 2007, vol. 46, 5670-5703